# EUROPÄISCHE PATENTSCHRIFT

(11) **EP 0 988 217 B1**
(45) Veröffentlichungstag und Bekanntmachung des Hinweises auf die Patenterteilung: **28.11.2001**
(21) Anmeldenummer: 98934941.0
(22) Anmeldetag: 09.06.1998
(51) Int. Cl.: B62M 7/12, B60K 17/26

(54) **TRIEBSATZSCHWINGE FÜR EIN- ODER MEHRSPURIGE, ELEKTROMOTORISCH ANGETRIEBENE FAHRZEUGE**
SWINGING ARM MOTOR UNIT FOR SINGLE-TRACK OR MULTIPLE-TRACK ELECTRIC MOTOR DRIVEN VEHICLES
ENSEMBLE BRAS OSCILLANT-MOTEUR POUR VEHICULES A VOIE UNIQUE OU A VOIES MULTIPLES, ENTRAINES PAR UN MOTEUR ELECTRIQUE

(30) Priorität: 12.06.1997 DE 19724689; 20.11.1997 DE 19751371
(43) Veröffentlichungstag der Anmeldung: 29.03.2000
(73) Patentinhaber: Schiller, Helmut, 64625 Bensheim (DE)
(72) Erfinder: Schiller, Helmut, 64625 Bensheim (DE)
(74) Vertreter: Helber, Friedrich G., Dipl.-Ing.
(86) Internationale Anmeldenummer: EP9803464
(87) Internationale Veröffentlichungsnummer: WO9856647

(56) Entgegenhaltungen:
- EP-A- 0 050 057
- EP-A- 0 378 397
- WO-A-97/18125
- DE-A- 4 344 008
- FR-A- 2 439 128

## Beschreibung

Die Erfindung betrifft eine Triebsatzschwinge für ein- oder mehrspurige motorgetriebene Fahrzeuge, insbesondere Motorroller und leichte Fahrzeuge zur Beförderung von Personen oder Lasten etc. mit einem im Bereich eines Endes eines langgestreckten Schwingengehäuses angeordneten, als Elektromotor mit weitgehend geschlossenem Gehäuse ausgebildeten Antriebsmotor und einer im Bereich des anderen Endes des Schwingengehäuses drehbar gelagerten Nabe zur Halterung eines Fahrzeug-Antriebsrades, wobei die ins Schwingengehäuse geführte Abtriebswelle des Antriebsmotors durch eine im Schwingengehäuse gekapselte Transmissionseinrichtung zwangsläufig mit der Rad-Nabe für das Fahrzeug-Antriebsrad gekoppelt ist und das Schwingengehäuse Einrichtungen zur verschwenkbaren Lagerung um eine von der Drehachse der Rad-Nabe beabstandete und parallel zu ihr verlaufende Achse am oder im Rahmen oder Chassis des motorisch angetriebenen Fahrzeugs aufweist, und weigstens eine Freilaufkupplung vorgesehen ist, welche die zwangsläufige Kopplung des Antriebsmotors mit dem Fahrzeug-Antriebsrad aufhebt, wenn das vom Antriebsmotor in die Transmissionseinrichtung eingeleitete Antriebsmoment kleiner ist als ein vom Fahrzeug-Antriebsrad über die Rad-Nabe auf die Transmissionseinrichtung einwirkende Drehmoment.

Derartige Triebsatzschwingen, welche eine integrale Baueinheit aus einem Antriebsmotor, einem eine Transmissionseinrichtung aufnehmenden Schwingengehäuse und einer im Schwingengehäuse gelagerten und über die Transmissionseinrichtung mit dem Abtrieb des Antriebsmotors gekoppelte Nabe zur Halterung des Antriebsrades darstellen, finden vor allem bei leistungsschwächeren zweirädrigen Fahrzeugen, wie z.B. Motorrollern, aber auch bei drei- oder vierrädrigen Fahrzeugen, wie Lastkarren, Golfwagen etc. Anwendung. Dabei werden heute fast ausschließlich Verbrennungskraftmaschinen als Antriebsmotoren eingesetzt, welche aufgrund der ihnen eigenen Drehmomentencharakteristik die Zwischenschaltung eines das Übersetzungsverhältnis zwischen Motorabtrieb und Antriebsrad stüfehlos oder mehrstufig zu verändern erlaubenden Getriebes in der Transmissionseinrichtung erfordern. Solche stufenlosen oder mehrstufigen Getriebe haben zwangsläufig ein erhebliches Gewicht und verringern - je nach Bauart - die durch Übertragungsverluste (Reibung etc.) am Antriebsrad zur Verfügung stehende Antriebsleistung im Vergleich zu der vom Antriebsmotor erzeugten Antriebsleistung. Neben der ungünstigen Leistungs- oder Drehmomentencharakteristik haben Verbrennungskraftmaschinen auch weitere Nachteile, die z.B. in ihrem komplexen Aufbau, sowie der Abgabe von umweltschädlichen Abgasen und störender Geräuschbelastung liegen.

Die bei schwereren Personen- und Lastkraftwagen an sich bereits früher vorgeschlagene Verwendung von Elektromotoren als Antriebsmotor hat sich in der Vergangenheit nicht durchsetzen können, obwohl die zur Verfügung stehenden Elektromotoren bezüglich ihrer Drehmoment-Charakteristik günstiger als Verbrennungskraftmaschinen waren, jedoch bei den geforderten Antriebsleistungen eine geringe Gewichtseinsparung erbringen konnten, die durch das Gewicht und die Raumansprüche der zum Antrieb der Motoren verwendeten elektrischen Energie erforderlichen Stromspeicher, (d.h. Akkumulatoren, Batterien etc.) in ein ungünstiges Verhältnis verkehrt wurde. Elektromotorisch angetriebene Fahrzeuge waren im Vergleich zu verbrennungskraftgetriebenen Fahrzeugen schwer und hatten - infolge der begrenzten Kapazität der elektrischen Stromspeicher - nur geringe nutzbare Reichweiten. Auch die Lebensdauer der verwendeten Stromspeicher befriedigte nicht.

Sowohl bei Elektromotoren als auch bei elektrischen Akkumulatoren hat die Entwicklung in neuerer Zeit zu Verbesserungen geführt, welche die bis dahin bestehenden Nachteile mindern. So wurden Gleichstrommotoren, z.B. in Form der sog. "Axialfeldmotoren" (WO 95/17779) entwickelt, welche aufgrund ihres speziellen Aufbaus hohe Antriebsmomente bereits bei geringen Drehzahlen zur Verfügung stellen und darüber hinaus über einen größeren Bereich drehzahlsteuerbar sind. Auf dem Sektor der elektrischen Akkumulatoren sind die altbekannten Bleiakkumulatoren ebenso wie mit neuen Elektrodenwerkstoffen arbeitende Akkumulatoren weiterentwickelt worden, die nicht nur hinsichtlich des Gewichts-/Kapazitätsverhältnisses, sondern auch der erforderlichen Aufladezeiten günstigere Werte aufweisen. Auch die Lebensdauer wurde verbessert. Es wurden bereits Elektrofahrzeuge, und zwar speziell Motorroller der eingangs erwähnten Art (WO 97/18125 A2) vorgeschlagen, die jedoch bisher nicht zu marktfähigen Produkten geführt haben.

Der Erfindung liegt die Aufgabe zugrunde, eine Triebsatzschwinge für spezielle leistungsschwache motorgetriebene Fahrzeuge zu schaffen, bei welcher die Vorteile des Elektroantriebes zum Tragen kommen und die bisher bestehenden Nachteile deutlich verringert sind.

Ausgehend von einer Triebsatzschwinge der eingangs erwähnten Art wird diese Aufgabe erfindungsgemäß dadurch gelöst, daß die Transmissionseinrichtung mindestens zwei hintereinandergeschaltete Tränsmissionszüge aufweist, und daß der bzw. einer der Freiläufe zwischen die beiden Transmissionszüge eingeschaltet ist. Diese Anordnung des Freilaufs zwischen zwei hintereinandergeschalteten Transmissionszügen hat sowohl Vorteile bezüglich der Zugänglichkeit des Freilaufes und somit von dessen Wartung als auch bezüglich der Beanspruchung durch Verringerung der Drehzahl des im Schiebebetrieb weiterhin mit dem Antriebsrad gekoppelten umlaufenden Teils des Freilaufs im Vergleich zu einem motorseitig angeordneten Freilauf.

Eine weitere Freilaufkupplung kann im Antriebsmotor selbst vor dessen zum Anschluß an die Transmissionseinrichtung bestimmtem Abtriebsorgan, z.B. zwischen Rotornabe und Abtriebswelle angeordnet sein. D.h. diese Freilaufkupplung ist dann integraler Teil des Antriebsmotors.

In vorteilhafter Weiterbildung der Erfindung können mehrere. Freilaufkupplungen vorgesehen sein, von denen eine im Kopplungsbereich zwischen dem Antriebsmotor bzw. - wie vorerwähnt - im Antriebsmotor und der Transmissionseinrichtung und die andere im Bereich zwischen der Transmissionseinrichtung und der Radnabe vorgesehen ist.

Es empfiehlt sich, den elektrischen Motor mit parallel zur Rad-Nabe für das Fahrzeug-Antriebsrad verlaufender Drehachse am Schwinggehäuse anzuordnen, wobei dann die Einrichtung zur verschwenkbaren Lagerung des Schwinggehäuses im oder am Rahmen bzw. Chassis des zugehörigen Fahrzeugs so ausgebildet sind, daß die Drehachse des Antriebsmotors und die Schwenkachse der Triebsatzschwinge im wesentlichen zusammenfallen bzw. einen nur geringen Abstand voneinander haben. Bei der Verschwenkung der Triebsatzschwinge, welche durch ihre Abstützung am Chassis oder Rahmen über eine Feder oder ein Federbein gleichzeitig die Funktion der Federung des Antriebsrads des Fahrzeugs übernimmt, führt der Antriebsmotor nur eine Verschwenkbewegung aus, d.h. er ändert seine Höhenlage nicht. Dadurch wird eine Beeinträchtigung der Federwirkung durch das Gewicht des Antriebsmotors minimiert.

Der Antriebsmotor der erfindungsgemäßen Triebsatzschwinge wird vorzugsweise als sog. Axialfeldmotor ausgebildet, welcher die früher geschilderten vorteilhaften Eigenschaften bezüglich des günstigen Drehmomentenverlauf und des Bereichs der ansteuerbaren Drehzahlen aufweist. Die Verwendung von Elektromotoren anderer Bauformen kommt ebenfalls in Frage.

Dadurch ist es möglich, die Transmissionseinrichtung ohne Zwischenschaltung eines Unter- oder Übersetzungsgetriebes als einfachen kraft- oder formschlüssigen Übertragungszug, z.B. als Riemen- oder Kettentrieb auszubilden, wodurch Übertragungsverluste durch Untersetzungs- oder Getriebestufen entfallen.

Das Gehäuse des Elektromotors wird mit Vorteil weitgehend geschlossenausgebildet, wobei zur Durchströmung mit Kühlluft ein Ein- und Auslaß vorgesehen ist. Zumindest dem Einlaß wird zweckmäßig eine Filtereinrichtung für die Kühlluft vorgeschaltet, um das Eindringen von Staubteilchen und anderen Verschmutzungen, insbesondere auch das Eindringen metallischer Partikel in den Motor zu verhindern.

Der Kühlluft-Einlass bzw. die dort vorgesehene Filtereinrichtung werden in mit der erfindungsgemäßen Triebsatzschwinge ausgerüsteten Fahrzeugen zweckmäßig möglichst hoch angeordnet, um neben der Ausfilterung von Verunreinigungspartikeln auch Wasserzutritt bei Wasserduchfahrten oder starken Gewitterschauern weitestgehend auszuschließen. Auch bezüglich der Eintrittstemperatur der Kühlluft ist diese Anordnung von Vorteil, da in ungünstigen Fällen die Lufttemperatur direkt über.durch Sonneneinstrahlung stark aufgeheizten Asphalt-Straßenoberflächen erheblich über der eigentlichen Umgebungstemperatur liegen kann. Bei Einsatz der Triebsatzschwinge in Einspurfahrzeugen, z. B. Motorrollern bietet sich der Raum unmittelbar unter der Sitzbank hierfür an.

Der Freilauf selbst kann als an sich bekannter Klemmkörper- oder Hülsenfreilauf ausgebildet sein, welcher bei geringer Baugröße und dementsprechend geringem Gewicht sichere Funktionen und Lebensdauer aufweist.

Wenn in der erfindungsgemäßen Weise ausgebildete Triebsatzschwingen als Antriebseinheit(en) für mehrspurige Fahrzeuge, beispielsweise Lastkarren, Motor-Rikschas, Golfkarren etc. eingesetzt werdenn sollen, bei denen ein motorischer Rückwärts-Antrieb erwünscht oder erforderlich ist, werden mit Vorteil Einrichtungen zur wahlweisen Sperrung der Freilauffunktion des Freilaufs bzw. der Freiläufe vorgesehen. Diese Ausgestaltung erlaubt einen Rückwärtsfahr-Antrieb nach Sperrung der Freilauffunktion durch Umschaltung der elektrischen Motoranschlüsse. Eine gesonderte mechanische Getriebestufe als Rückwärtsgang ist dann nicht erforderlich.

Bei Verwendung der erfindungsgemäßen Triebsatzschwinge als Antrieb für einen Motorroller mit einer am vorderen Ende "den Lenkkopf für die Vorderrad-Aufhängung tragenden Rahmen aus Metallprofilen, bei welchen der Rahmen zwei quer zur Roller-Fahrtrichtung beabstandete, als geschlossene Rohrprofile ausgebildete Metallprofile aufweist, die im Bereich. des Lenkkopfs zusammengeführt und befestigt sind, vom Lenkkopf jeweils schräg nach außen und in Abwärtsrichtung bis unter das Niveau der Fußabstell-Plattform des Rollers, dann in parallelem Abstand etwa horizontal in den Bereich des in Fahrtrichtung rückwärtigen Endes der Fußabstell-Plattform und von dort wieder in Aufwärtsrichtung bis etwa zur Höhe der Sitze bzw. Sitzbank des Rollers geführt sind und zwischen den in Fahrtrichtung beabstandeten Zügen aus Metallprofilen Aufnahmen für den bzw. die Stromspeicher vorgesehen sind, ist die Ausgestaltung zweckmäßig so getroffen, daß zumindest die im Bereich der parallelem Abstand horizontal geführten Metallprofil-Abschnitte vorgesehenen Aufnahmen für die Stromspeicher einen an den Metallprofil-Abschnitten befestigte Wannenkörper aufweisen, welche.die Stromspeicher nicht nur gegen Nässe, Verschmutzung oder Steinschlag von der Straßenseite aus abschirmen, sondern zusätzlich zu einer Versteifung des Rahmens beiträgt.

Die Metallprofile sind zweckmäßig als Rechteckrohr- oder Flachhalbrundrohr-Profile aus Stahl oder Leichtmetall ausgebildet.

Die Erfindung ist in der folgenden Beschreibung in Verbindung mit der Zeichnung näher erläutert, und zwar zeigt:
- Fig. 1: eine Seitenansicht einer erfindungsgemäßen Triebsatzschwinge mit montiertem Antriebsrad in einer etwa die Einbaulage in einem Fahrzeug veranschaulichten Darstellung mit einer zur Abstützung der Triebsatzschwinge am.zugeordneten Fahrzeug-Chassis vorgesehenen Federbein;
- Fig. 2: eine Ansicht der Triebsatzschwinge, gesehen in Richtung des Pfeils 2 in Fig. 1;
- Fig. 3: eine Seitenansicht eines mit der erfindungsgemäßen Triebsatzschwinge ausgerüsteten Motorrollers;
- Fig. 4: eine Seitenansicht des Rahmens des Motorrcllers gemäß Fig. 3;
- Fig. 5.: eine Ansicht des Rahmens, gesehen in Richtung des Pfeils 5 in Fig. 4;
- Fig. 6: eine schematische Veranschaulichung der Lage der Triebsatzschwinge, des Antriebsrades und des Vorderrades beim Einsatz der Triebsatzschwinge in einem Einspur-Fahrzeug, z.B. dem in Fig. 3 gezeigten Motorroller; und
- Fig. 7: eine der Fig. 6 entsprechende schematische Veranschaulichung der Anordnung und Lage von zwei erfindungsgemäßen Triebsatzschwingen in einem Mehrspurfahrzeug, wobei die Lage und Anordnung des Vorderrades eines dreispurigen Fahrzeugs, z.B. eines Lastkarrens dargestellt und die alternative Anordnung von zwei parallelen lenkbaren Vorderrädern bei Ausgestaltung als zweispuriges Fahrzeug strichpunktiert veranschaulicht ist.

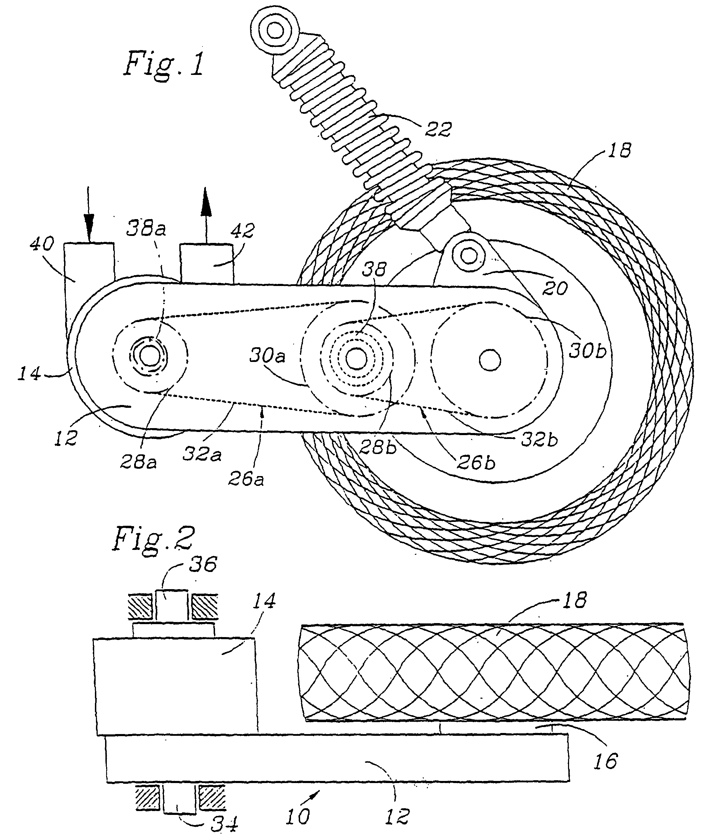

Die in den Figuren 1 und 2 gezeigte, in ihrer Gesamtheit mit 10 bezeichnete Triebsatzschwinge ist eine zu einer integralen Einheit zusammengefaßte Antriebsbaugruppe für elektromotorisch angetriebene Fahrzeuge, welche einen im einen Endbereich eines langgestreckten Schwingengehäuses 12 angeordneten elektrischen Antriebsmotor 14 und eine im anderen Endbereich des Schwingengehäuses 12 drehbar gelagerte Nabe 16 aufweist, an welcher das Antriebsrad 18 in üblicher Weise durch Aufschrauben befestigbar ist. Auch die - nicht gezeigte - Bremse für das Antriebsrad 18 kann am Schwingengehäuse 12 bzw. an der Rad-Nabe 16 integriert sein.

In Fig.. 1 ist auf der Oberseite des Schwinggehäuses 12 eine Aufnahme 20 für das schwingengehäuseseitige Ende eines am oberen Ende am Chassis oder Rahmen eines zugehörigen Fahrzeugs abgestütztes Federbein 22 dargestellt.

Der Antriebsmotor 14 ist im dargestellten Fall ein Elektromotor in Axialfeldbauweise, der seine Antriebsenergie aus im zugehörigen Fahrzeug mitgeführten elektrische Stromspeicher, z.B. Akkumulatoren, bezieht. Aufgrund der speziellen Eigenschaften solcher Elektromaschinen ist die Anordnung eines Unter- oder Übersetzungsgetriebes zwischen der ins Innere des Schwingengehäuses geführten (nicht gezeigten) Abtriebswelle des Antriebsmotors 14 und der im Schwinggehäuse drehbar gelagerten Rad-Nabe 16 für das Antriebsrad nicht oder nur bedingt erforderlich, so daß für die Übertragung der Drehung der Abtriebswelle des Antriebsmotors 14 auf die Rad-Nabe 16 und somit das Abtriebsrad 18 des Fahrzeugs eine Transmissionseinrichtung 26a, 26b in Form eines zweistufigen Ketten-, Riemen- oder Zahnriemenantriebes genügt, wobei das mit der Motorwelle 14 verbundene Antriebsrad mit 28a, das mit der Nabe 16 verbundene angetriebene Rad mit 30b und die die beiden Räder 28a und 30b koppelnden Transmissionselemente in Form von Keilriemenen, Zahnriemenen oder Ketten mit 32a, 32b bezeichnet sind.

In Figur 1 ist schematisch auch noch die Anordnung einer weiteren Freilaufkupplung 38a gestrichelt angedeutet, die im Antriebsmotor 14 integriert sein soll, so daß dessen Abtriebswelle direkt mit dem Antriebsritzel oder -rad 28a koppelbar ist.

Die Transmissionseinrichtung ist - wie bereits erwähnt- in zwei Transmissionszüge 26a, 26b, d.h. zwei hintereinandergeschaltete Ketten-, Riemen- oder Zahnriemen-Triebe unterteilt ist. Dabei ist das Ritzel 28a über eine Kette bzw. einen Riemen 32a mit einem Ketten- oder Riemenrad 30a verbunden, welches seinerseits mit einem Ketten- oder Riemenritzel 28b gekoppelt ist, welches über einen zweiten Riemen, Zahnriemen oder eine Kette 32b mit einem angetriebenen Ketten- oder Riemenrad 30b gekoppelt ist. Bei dieser Ausgestaltung des Transmissionszugs, der die konstruktive Verwirklichung einer starken Untersetzung zwischen der Drehzahl der Antriebswelle des Antriebsmotors 14 und der Rad-Nabe 16 ermöglicht, wird nur eine Freilaufkupplung 38 im Verbindungsbereich des angetriebenen Ketten- oder Riemenrads 30a und des zweiten Ritzels oder Kettenrads 28b angeordnet.

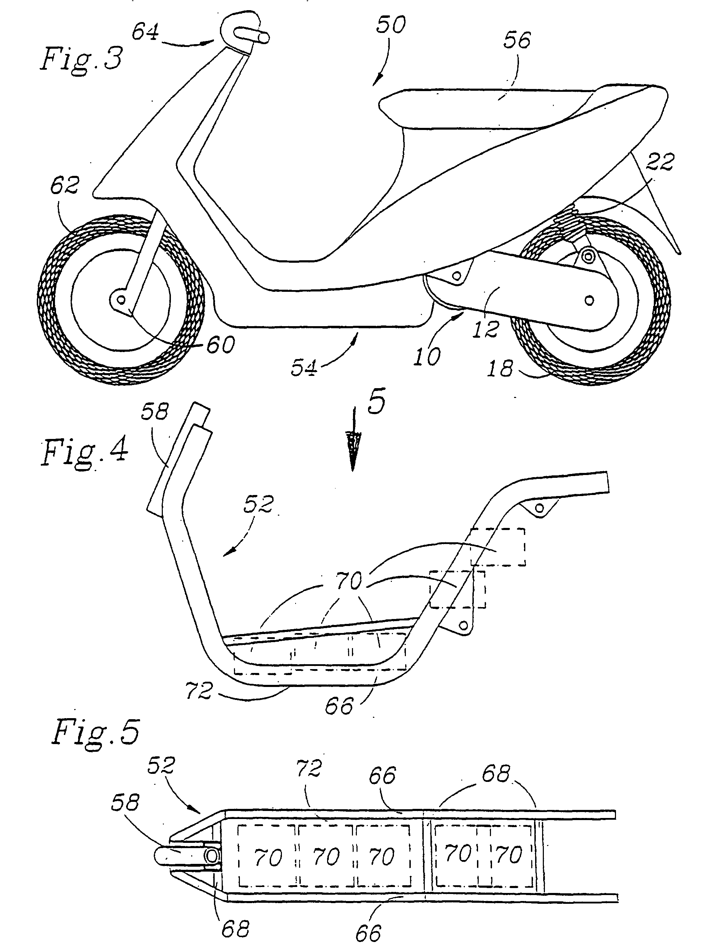

Zusätzlich zeigt Figur 1 noch Anschlüsse 40, 42 für die Zu-bzw. Abfuhr von Kühlluft in den bzw. aus dem im übrigen vollständig gegen Eindringen von Spritzwasser oder Schmutzpartikel gekapselten Antriebsmotor 14. Die Anschlüsse 40, 42 sind an die von der Fahrbahn wegweisende Oberseite des Antriebsmotors 14 gelegt, so daß sie bei Verwendung der Triebsatzschwinge 10 in einem Fahrzeug, wie dem nachstehend in Verbindung mit Figur 3 noch beschriebenen Motorroller 50 innerhalb der Karroserie 54 unterhalb der Sitzbank 56 münden, wobei - zumindest vor die Zuluftleitung - ein (nicht gezeigter) Luftfilter und/oder Feuchtigkeitsabscheider vorgesehen sein kann. Die elektrischen Leitungen zum Motor sind zweckmäßig in der Zuluftleitung verlegt.

In Fig. 2 ist schematisch die verschwenkbare Lagerung der Triebsatzschwinge 10 mittels von der motorabgewandten Seite des Schwingengehäuses 12 einerseits und der schwingengehäuseabgewandten Seite des Motors 14 vortretender Lagerzapfen 34 bzw. 36 angedeutec. Es ist ersichtlich, daß die Anordnung so getroffen ist, daß die Längsmittelachsen der Lagerzapfen 34 und 36 und somit die Schwenkachse der Triebsatzschwinge 10 mit der Drehachse des Antriebsmocors 14 zusammenfällt, wodurch der Einfluß der Masse des Antriebsmotors 14 auf das Federungsverhalten der Triebsatzschwinge möglichst gering gehalten wird.

In Figur 3 ist als Beispiel für ein mit der erfindungsgemäßen Triebsatzschwinge 10 ausrüstbares Fahrzeug ein Motorroller 50 der heute üblichen Bauart dargestellt, dessen die Triebsatzschwinge halternder Rahmen 52 in den Figur 4 und 5 gesondert dargestellt ist. Der Rahmen ist durch die übliche, heute in der Regel aus Kunststoff hergestellte Karosserie 54 verkleidet, welche in ihrem rückwärtigen, oberhalb der Triebsatzschwinge liegenden Bereich eine Sitzbank 56 trägt. An dem dem Antriebsrad 18 gegenüberliegenden vorderen Ende des Rahmens 52 ist die hülsenförmige Lageraufnahme des Lenkkopfs 58 des Motorrollers 51 vorgesehen. In dieser Lageraufnahme ist die im dargestellten Fall als Teleskopgabel 60 ausgebildete Vorderradaufhängung für das lenkbare Vorderrad 62 verdrehbar gelagert. Der Lenker 64 ist auf dem aus dem oberen Ende des Lenkkopfs 58 herausgeführten Ende der mit der Teleskopgabel 60 verbundenen Lenkachse angeordnet.

Der Rahmen 52 weist zwei quer zur Roller-Fahrtrichtung beabstandete, als geschlossene Rohrprofile ausgebildete Metallprofile 66 auf, die im Bereich des Lenkkopfs 58 zusammengeführt und z.B. durch Schweißung befestigt sind. Vom Lenkkopf 58 verlaufen die Metailprofile 66 zunächst jeweils schräg nach außen und in Abwärtsrichtung unter das Niveau der Fußabstell-Plattform des Rollers dann in parallelem Abstand etwa horizontal im Bereich des in Fahrtrichtung rückwärtigen Endes der Fußabstell-Plattform und von dort wieder in Aufwärtsrichtung bis etwa zur Höhe der Sitze bzw.

Sitzbank 56. Die rückwärtigen Enden der Profile 66 werden zweckmäßig zur Versteifung des Rahmens durch ein Querprofil 68 miteinander verbunden, wobei zusätzliche Querprofile 68 zur weiteren Rahmen-Versteifung in Zwischenbereichen vorgesehen sein können. An diesen Querprofilen 63 können dann auch Aufnahmen für die in den Figuren 4 und 5 nur strichpunktiert angedeuteten Stromspeicher 70 angeordnet sein. Die beschriebene spezielle Ausgestaltung des Rahmens 52 erlaubt die Anordnung der Stromspeicher 70 zwischen den-zweckmäßig von hochkant gestellten Rechteckrohr- oder Flachhalbrundrohr-Profilen gebildeten - Metallprofilen 66, wodurch die Aufnahme zwischen den Metallprofilen 66 geschützt und - insbesondere im Bereich der Fußabstell-Plattform - in günstiger Schwerpunktlage vorgesehen werden können.

Zum Schutz der Stromspeicher 70 gegen Beschädigungen ist im Bereich der Fußabstell-Plattform zwischen den Metallprofilen 66 ein Wannenkörper 72 vorgesehen sein, in welchem die Aufnahmen für die dort vorgesehenen Stromspeicher 70 gebildet sind.

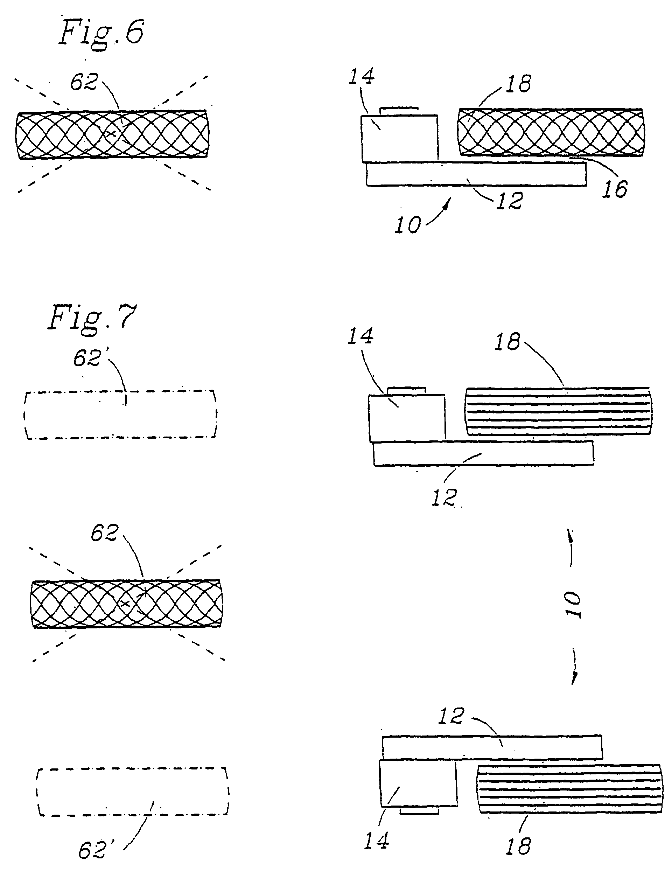

Die relative Lage der Triebsatzschwinge 10 mit dem Antriebsrad 18 in bezug auf das lenkbare Vorderrad 66 beim Motorroller 50 gemäß Figur 3 ist auch in Figur 6 veranschaulicht. Es ist ersichtlich, daß das Vorderrad 66 und das Antriebsrad 18 in Fahrtrichtung fluchten.

Anwendungen von - im dargestellten Fall zwei - erfindungsgemäßen Triebsatzschwingen 10 in Mehrspurfahrzeugen sind in Figur 7 veranschaulicht. Dabei ist der Aufbau so getroffen, daß symmetrisch zur senkrechten Längsmittelebene des Fahrzeugs zwei Triebsatzschwingen 10 auf gegenüberliegenden Seiten der Längemittelebene angeordnet sind. Zum Lenken des Fahrzeugs ist in der Längsmittelebene des Fahrzeugs mit Abstand vor den Triebsatzschwingen ein mittels eines Lenkers verdrehbares Vorder-Rad 62 vorgesehen. Es entsteht so ein dreirädriges und dreispuriges Fahrzeug, wie es - mit konventionellen Antrieben durch Brennkraftmotoren - in Form von sogenannten Lastkarren bekannt ist. Anstelle des einen mittigen vorderen lenkbaren Rades 62 können auch die in Figur 7 zusätzlich strichpunktiert angedeuteten über eine Achsschenkellenkung lenkbaren Räder 62' vorgesehen sein, wodurch ein vierrädriges, zweispuriges Fahrzeug entsteht, wie sie - ebenfalls mit Antrieb durch Brennkraftmaschinen - als sportliche Geländefahrzeuge oder auch Golfwagen etc. an sich bekannt sind.

Zur Steuerung des Antriebsmotors im Fahrbetrieb der mit der erfindungsgemäßen Triebsatzschwinge 10 ausgerüsteten Fahrzeuge müssen natürlich - hier nicht gezeigte - elektrische oder elektronische Steuerungseinrichtungen vorgesehen sein, die aber an sich bekannt sind und nicht näher beschrieben werden sollen. Die elektrische Steuerung kann aus einer gesonderten Steuereinheit und einer Leistungseinheit bestehen, wobei diese beiden Komponenten aber auch zu einer integralen Einheit zusammengefaßt werden können, welche einen Stromsteller, das Ladegerät für die Stromspeicher, einen DC/DC-Wandler, eine Lade-Überwachungsschaltung und eine Lade-Regelung sowie Energieanzeige umfaßt. Die Geschwindigkeitsregelung kann über einen dem Gas-Drehgriff bei brennkrafrgetriebenen Kraftfahrzeugen entsprechenden Drehgriff am Lenker 64 erfolgen, welcher über einen Bowdenzug ein Potentiometer oder auch einen Kontroller (Stromsteller) in der elektrischen Steuerschaltung verstellt. Auch eine Schaltung, welche die elektrischen Anschlüsse am jeweils zugeordneten Elektromotor umpolt, wodurch dieser mit umgekehrter Drehrichtung angetrieben wird und so eine Rückwärtsfahrt ermöglicht, kann in die elektrische Steuerung integriert sein, wobei auch - in diesem Fall vorgesehene - Einrichtungen zur Sperrung der Freilauffunktion des Freilaufs bzw. der Freiläufe über die elektrische Steuerung bei der Umpolung der elektrischen Anschlüsse der Elektromotoren automatisch betätigt werden.

Als wesentlich für den Betrieb eines mit der erfindungsgemäßen Triebsatzschwinge ausgestalteten Fahrzeugs hat es sich erwiesen, daß der Antriebsmotor bei Bergabfahrt oder beim Bremsen, vom Antriebsrad entkoppelt und dadurch sichergestellt wird, daß der Antriebsmotor 14 nicht zwangsläufig vom Antriebsrad angetrieben wird und als Generator arbeitet. Insbesondere bei Bergabfahrten würde der Antriebsmotor hohe elektrische Ströme erzeugen, welche zu Schädigungen oder auch zur Zerstörung der mitgeführten Strömspeicher führen können, wenn sie direkt in die Stromspeicher zurückgespeist würden. Durch die erfindungsgemäß vorgesehene Entkopplung des Antriebsmotors 14 vom Antriebsrad 18 im Schiebebetrieb durch den im Übertragungszug zwischen Antriebsmotor 14 und Antriebsrad 18 vorgesehenen, an sich bekannten Freilauf 38 bzw.-gegebenenfalls zusätzlichen Freilauf 38a wird dies verhindert. Durch die im normalen Fahrbetrieb von Fahrzeugen auftretenden Phasen des Schiebebetriebs wird die Stromentnahme aus den Stromspeichern jeweils unterbrochen. Es hat sich gezeigt, daß die Unterbrechungen der Stromentnahme aus den Stromspeichern sich positiv auf deren Lebensdauer und Energieausbeute auswirkt. Durch die spezielle Anordnung des Freilaufs 38 zwischen den Transmissionszügen 26a und 26b kann dieser in einem mittleren Bereich des Schwingengehäuses 12 angeordnet werden, wo er für Wartungs- und Reparaturzwecke durch einen (nicht gezeigten) abnehmbaren Gehäusedeckel leicht zugänglich ist. Ein weiterer Vorteil dieser Anordnung besteht darin, daß die Drehzahl des mit dem Antriebsrad im Schiebebetrieb weiterhin umlaufenden Teils des Freilaufs im Vergleich zu einem mocorseitig angeordnten Freilauf deutlich geringer und so die einwirkende Beanspruchung bei wiedereinsetzendem Antrieb vom Motor aus verringert sind.

## Patentansprüche

1. Triebsatzschwinge (10) für ein- oder mehrspurige motorgetriebene Fahrzeuge, insbesondere Motorroller (50) und leichte Fahrzeuge zur Beförderung von Personen oder Lasten etc. mit einem im Bereich eines Endes an einem langgestreckten Schwingengehäuse (12) angeordneten, als Elektromotor mit weitgehend geschlossenem Gehäuse ausgebildeten Antriebsmotor (14) und einer im Bereich des anderen Endes des Schwingengehäuses drehbar gelagerten Nabe (16) zur Halterung eines Fahrzeug-Antriebsrads (18), wobei die ins Schwingengehäuse (12) geführte Abtriebswelle des Antriebsmotors (14) durch eine im Schwingengehäuse (12) eingekapselte Transmissionseinrichtung (26) zwangsläufig mit der Rad-Nabe (16) für das Fahrzeug-Antriebsrad gekoppelt ist und das Schwingengehäuse (12) Einrichtungen zur verschwenkbaren Lagerung um eine von der Drehachse der Rad-Nabe (16) beabstandete und parallel zu ihr verlaufende Achse am oder im Rahmen oder Chassis des motorisch angetriebenen Fahrzeugs aufweist und wenigstens eine Freilaufkupplung (38a, 38b; 38) vorgesehen ist, welche die zwangsläufige Kopplung des Antriebsmotors mit dem Fahrzeug-Antriebsrad (18) aufhebt, wenn das vom Antriebsmotor (14) in die Transmissionseinrichtung (26) eingeleitete Antriebsmoment kleiner ist, als ein vom Fahrzeug-Antriebsrad (18) über die Rad-Nabe (16) auf die Transmissionseinrichtung einwirkende Drehmoment,
**dadurch gekennzeichnet,**
**daß** die Transmissionseinrichtung (26) mindestens zwei hintereinandergeschaltete Transmissionszüge (26a, 26b) aufweist, und daß der bzw. einer der Freiläufe (38) zwischen die beiden Transmissionszüge (26a, 26b) eingeschaltet ist.

2. Triebsatzschwinge nach Anspruch 1, **dadurch gekennzeichnet, daß** eine weitere Freilaufkupplung (38a) im Antriebsmotor (14) vor dessen zum Anschluß an die Transmissionseinrichtung (26) bestimmtem Abtriebsorgan angeordnet ist.

3. Triebsatzschwinge nach Anspruch 1 oder 2, **dadurch gekennzeichnet, daß** mehrere Freilaufkupplungen (38a, 38b) vorgesehen sind, von denen eine im Kopplungsbereich zwischen dem Antriebsmotor (14) und der Transmissionseinrichtung (26) und eine andere im Bereich zwischen der Transmissionseinrichtung (26) und der Rad-Nabe (16) und/oder in der Transmissionseinrichtung selbst vorgesehen ist.

4. Triebsatzschwinge nach einem der Ansprüche 1 bis 3, **dadurch gekennzeichnet, daß** der Elektromotor (14) mit parallel zur Drehachse der Rad-Nabe (16) für das Fahrzeug-Antriebsrad (18) verlaufender Drehachse am Schwingengehäuse (12) angeordnet ist, und daß die Einrichtungen zur verschwenkbaren Lagerung des Schwingengehäuses im oder am Rahmen (32) bzw. Chassis des zugehörigen Fahrzeugs so ausgebildet sind, daß die Drehachse des Antriebsmotors'(14) und die Schwenkachse der Triebsatzschwinge (10) im wesentlichen zusammenfallen bzw. einen nur geringen Abstand voneinander haben.

5. Triebsatzschwinge nach einem der Ansprüche 1 bis 4, **dadurch gekennzeichnet, daß** der Elektromotor (14) ein Axialfeldmotor ist.

6. Triebsatzschwinge nach einem der Ansprüche 1 bis 5, **dadurch gekennzeichnet, daß** die im Schwingengehäuse (12) eingekapselte Transmissionseinrichtung (28; 30; 32) als form- oder kraftschlüssiger Riemen- oder Kettentrieb ausgebildet ist.

7. Triebsatzschwinge nach einem der Ansprüche 1 bis 6, **dadurch gekennzeichnet, daß** das Gehäuse des Elektromotors (14) weitgehend geschlossen ist, zur Durchströmung mit Kühlluft jedoch einen Ein- und einen Auslaß ( 40; 42) aufweist.

8. Triebsatzschwinge nach Anspruch 7, **dadurch gekennzeichnet, daß** vor dem Lufteinlaß (40) des Elektromotors (14) eine Filtereinrichtung für die Kühlluft vorgeschaltet ist.

9. Triebsatzschwinge nach einem der Ansprüche 1 bis 6, **dadurch gekennzeichnet, daß** der Elektromotor eine Flüssigkeitskühlung aufweist.

10. Triebsatzschwinge nach einem der Ansprüche 1 bis 9, **dadurch gekennzeichnet, daß** der Freilauf bzw. die Freiläufe als an sich bekannte(r) Klemmkörper- oder Hülsenfreilauf etc. ausgebildet ist bzw. sind.

11. Triebsatzschwinge nach einem der Ansprüche 1 bis 10, **dadurch gekennzeichnet, daß** Einrichtungen zur wahlweisen Sperrung der Freilauffunktion des Freilaufs (38) bzw. der Freiläufe (38; 38a) vorgesehen sind.

12. Mit einer Triebsatzschwinge (10) nach einem der Ansprüche 1 bis 10 ausgerüsteter Motorroller (50) mit einem am vorderen Ende den Lenkkopf für die Vorderrad-Aufhängung tragenden Rahmen (52) aus Metallprofilen, in welchem die Triebsatzschwinge (10) verschwenkbar gelagert ist, wobei der Rahmen (52) zwei quer zur Roller-Fahrtrichtung beabstandete, als geschlossene Rohrprofile ausgebildete Metallprofile (66) aufweist, die im Bereich des Lenkkopfs (58) zusammengeführt und befestigt sind, von der Lageraufnahme (58) zunächst jeweils schräg nach außen und in Abwärtsrichtung bis unter das Niveau der Fußabstell-Plattform des Rollers (50), dann in parallelem Abstand etwa horizontal in den Bereich des in Fahrtrichtung rückwärtigen Endes der Fußabstell-Plattform und von dort wieder in Aufwärtsrichtung bis etwa zur Höhe der Sitze bzw. Sitzbank (56) des Rollers (50) geführt sind, und im Bereich zwischen den seitlich beabstandeten Metallprofilen Aufnahmen für Stromspeicher vorgesehen sind,
**dadurch gekennzeichnet,**
**daß** zumindest die im Bereich der in parallelem Abstand horizontal geführten Metallprofil-Abschnitte vorgesehene Aufnahme für die Stromspeicher (70) wenigstens einen an den Metallprofilen (66) befestigten Wannenkörper (72) aufweisen.

13. Roller nach Anspruch 12, **dadurch gekennzeichnet, daß** die Metallprofile (66) als Rechteckrohr- oder Flachhalbrundrohr-Profile aus Stahl oder Leichtmetall ausgebildet sind.

## Claims

1. Motor unit swinging arm (10) for single-track or multiple-track motor-powered vehicles, particularly motor scooters (50) and light vehicles for transporting persons or loads etc., with a drive motor (14), which is disposed in the region of one end on an elongated swinging arm housing (12) and is constructed as an electric motor with a largely closed housing, and a hub (16) which is rotatably mounted in the region of the other end of the swinging arm housing in order to hold a vehicle driving wheel (18), wherein the output shaft of the drive motor which is led into the swinging arm housing (12) is forcibly coupled to the wheel hub (16) for the vehicle driving wheel by a transmission arrangement (26) encased in the swinging arm housing (12) and the swinging arm housing (12) has means for pivotable mounting about an axis which is spaced from the axis of rotation of the wheel hub (16) and extends parallel thereto on or in the frame or chassis of the motor-driven vehicle, and at least one freewheel clutch (38a, 38b; 38) is provided which breaks the enforced coupling of the drive motor to the vehicle driving wheel (18) when the driving moment introduced by the drive motor (14) into the transmission arrangement (26) is less than a torque acting from the vehicle driving wheel (18) via the wheel hub (16) upon the transmission arrangement, **characterised in that** the transmission arrangement (26) has at least two transmission lines (26a, 26b) connected one behind the other, and that the freewheel mechanism or one of the freewheel mechanisms is connected between the two transmission lines (26a, 26b).

2. Motor unit swinging arm as claimed in Claim 1, **characterised in that** a further freewheel clutch (38a) is disposed in the drive motor (14) before the output element thereof which is intended for connection to the transmission arrangement (26).

3. Motor unit swinging arm as claimed in Claim 1 or 2, **characterised in that** a plurality of freewheel clutches (38a, 38b) are provided, of which one is provided in the coupling region between the drive motor (14) and the transmission arrangement (26) and another is provided in the region between the transmission arrangement (26) and the wheel hub (16) and/or in the transmission arrangement itself.

4. Motor unit swinging arm as claimed in one of Claims 1 to 3, **characterised in that** the electric motor (14) is disposed on the swinging arm housing (12) with the axis of rotation extending parallel to the axis of rotation of the wheel hub (16) for the vehicle driving wheel (18), and that the means for pivotable mounting of the swinging arm housing in or on the frame (32) or chassis of the appertaining vehicle are constructed so that the axis of rotation of the drive motor (14) and the pivot axis of the motor unit swinging arm (10) substantially coincide or are only slightly spaced from one another.

5. Motor unit swinging arm as claimed in one of Claims 1 to 4, **characterised in that** the electric motor (14) is an axial field motor.

6. Motor unit swinging arm as claimed in one of Claims 1 to 5, **characterised in that** the transmission arrangement (28; 30; 32) encased in the swinging arm housing (12) is constructed as a positive or non-positive belt or chain drive.

7. Motor unit swinging arm as claimed in one of Claims 1 to 6, **characterised in that** the housing of the electric motor (14) is largely closed, but has an inlet and an outlet (40; 42) for cooling air to flow through.

8. Motor unit swinging arm as claimed in Claim 7, **characterised in that** a filter arrangement for the cooling air is connected before the air inlet (40) of the electric motor (14).

9. Motor unit swinging arm as claimed in one of Claims 1 to 6, **characterised in that** the electric motor has liquid cooling.

10. Motor unit swinging arm as claimed in one of Claims 1 to 9, **characterised in that** the freewheel mechanism or mechanisms is/are constructed as clamping member freewheel mechanism(s) or sleeve freewheel mechanism(s) which are known *per se.*

11. Motor unit swinging arm as claimed in one of Claims 1 to 10, **characterised in that** means for selectively blocking the freewheel function of the freewheel mechanism (38) or the freewheel mechanisms (38; 38a) are provided.

12. Motor scooter (50) equipped with a motor unit swinging arm (10) as claimed in one of Claims 1 to 10, with a frame (52) made from metal sections which bears on the front end the steering head for the front wheel suspension and in which the motor unit swinging arm (10) is pivotably mounted, wherein the frame (52) has two metal sections (66) which are spaced transversely with respect to the direction of travel of the scooter and which are brought together and fixed in the region of the steering head (58), the said metal sections being led from the bearing receptacle (58) first of all obliquely outwards and in the downward direction to below the level of the foot board of the scooter, then with parallel spaced approximately horizontally into the region of the rear end of the foot board in the direction of travel and from there in the upward direction again to approximately the height of the seat or bench seat (56) of the scooter (50), and in the region between the laterally spaced metal sections receptacles are provided for batteries, **characterised in that** at least the receptacle for the batteries (70) provided in the region of the portions of the metal sections which are led horizontally with parallel spacing have at least one dished member (72) fixed on the metal sections (66).

13. Scooter as claimed in Claim 12, **characterised in that** the metal sections (66) are constructed as rectangular tube sections or flat oval sections made from steel or light alloy.

## Revendications

1. Bras oscillant de groupe moteur (10) pour véhicules à moteur à une ou plusieurs voies, en particulier scooters (50) et véhicules légers pour le transport de personnes ou de charges, etc., comportant un moteur électrique d'entraînement (14) à carcasse en grande partie fermée placé dans la zone d'une extrémité sur un carter allongé de bras oscillant (12), et un moyeu (16) monté tournant dans la zone de l'autre extrémité du carter de bras oscillant et destiné à supporter une roue motrice de véhicule (18), l'arbre de sortie du moteur d'entraînement (14), entrant dans le carter de bras oscillant (12), étant accouplé de force au moyeu (16) pour la roue motrice de véhicule par un dispositif de transmission (26) enfermé dans le carter de bras oscillant (12), et le carter de bras oscillant (12) présentant des moyens de montage basculant autour d'un axe parallèle à l'axe de rotation du moyeu pour roue (16) sur ou dans le cadre ou le châssis du véhicule à moteur, et étant prévu au moins un accouplement à roue libre (38a, 38b ; 38) qui supprime l'accouplement forcé du moteur d'entraînement avec la roue motrice de véhicule (18) lorsque le couple moteur introduit par le moteur d'entraînement (14) dans le dispositif de transmission (26) est inférieur à un couple agissant de la roue motrice de véhicule (18) sur le dispositif de transmission par l'intermédiaire du moyeu pour roue (16),
**caractérisé par le fait**
**que** le dispositif de transmission (26) présente au moins deux trains de transmission montés l'un derrière l'autre (26a, 26b), et que la roue libre ou une des roues libres (38) est montée entre les deux trains de transmission (26a, 26b).

2. Bras oscillant de groupe moteur selon la revendication 1, **caractérisé par le fait qu'**un autre accouplement à roue libre (38a) est prévu dans le moteur d'entraînement (14) avant l'organe de sortie de celui-ci destiné à la liaison au dispositif de transmission (26).

3. Bras oscillant de groupe moteur selon l'une des revendications 1 et 2, **caractérisé par le fait qu'**il est prévu plusieurs accouplements à roue libre (38a, 38b) dont un est prévu dans la zone d'accouplement entre le moteur d'entraînement (14) et le dispositif de transmission (26) et un autre prévu dans la zone entre le dispositif de transmission (26) et le moyeu pour roue (16) et/ou dans le dispositif de transmission lui-même.

4. Bras oscillant de groups moteur selon l'une des revendications 1 à 3, **caractérisé par le fait que** le moteur électrique (14) est monté sur le carter de bras oscillant (12) avec son axe de rotation parallèle à l'axe de rotation du moyeu (16) pour la roue motrice de véhicule (18), et que les moyens de montage basculant du carter de bras oscillant dans ou sur le cadre (32) ou le châssis du véhicule sont conçus de façon que l'axe de rotation du moteur d'entaînement (14) et l'axe de basculement du bras oscillant de groupe moteur (10) coïncident sensiblement ou soient à une faible distance l'un de l'autre.

5. Bras oscillant de groupe moteur selon l'une des revendications 1 à 4, **caractérisé par le fait que** le moteur électrique (14) est un moteur à champ axial.

6. Bras oscillant de groupe moteur selon l'une des revendications 1 à 5, **caractérisé par le fait que** le dispositif de transmission (28 ; 30 ; 32) enfermé dans le carter de bras oscillant (12) est une transmission à courroie ou à chaîne positive ou à coopération de forme.

7. Bras oscillant de groupe moteur selon l'une des revendications 1 à 6, **caractérisé par le fait que** la carcasse du moteur électrique (14) est en grande partie fermée, mais présente une entrée et une sortie (40 ; 42) pour la traversée d'air de refroidissement.

8. Bras oscillant de groupe moteur selon la revendication 7, **caractérisé par le fait que** devant l'entrée d'air (40) du moteur électrique (14) est monté un dispositif de filbation de l'air de refroidissement.

9. Bras oscillant de groupe moteur selon l'une des revendications 1 à 6, **caractérisé par le fait que** le moteur électrique présente un refroidissement par liquide.

10. Bras oscillant de groupe moteur selon l'une des revendications 1 à 9, **caractérisé par le fait que** la roue libre ou les roues libres sont des roues libres à corps de serrage ou à douille connues, etc.

11. Bras oscillant de groupe moteur selon l'une des revendications 1 à 10, **caractérisé par le fait qu'**il est prévu des moyens de blocage facultatif de la fonction de roue libre de la roue libre (38) ou des roues libres (38; 38a).

12. Scooter (50) équipé d'un bras oscillant de groupe moteur (10) selon l'une des revendications 1 à 10, comportant un cadre (52) en profilés métalliques qui porte à son extrémité avant la tête de direction pour la suspension de roue avant et dans lequel le bras oscillant de groupe moteur (10) est monté basculant, le cadre (52) présentant deux profilés métalliques (66) constitués de profilés tubulaires fermés, et espacés perpendiculairement à la direction de marche du scooter, qui sont réunis et fixés dans la zone de la tête de direction (58) et vont du support de palier (58), d'abord, chacun, obliquement vers l'extérieur et en descendant jusque sous le niveau de la plate-forme d'appui des pieds du scooter (50), ensuite parallèlement et à peu près horizontalement dans la zone de l'extrémité arrière dans la direction de marche de la plate-forme d'appui des pieds, et de là, en remontant, à peu prés jusqu'à la hauteur des sièges ou du banc (56) du scooter (50), et dans la zone entre les profilés métalliques espacés latéralement étant prévus des logements pour des accumulateurs d'énergie électrique,
**caractérisé par le fait**
**qu'**au moins le logement prévu pour les accumulateurs d'énergie électrique (70) prévu dans la zone des parties parallèles et horizontales des profilés métalliques présente au moins un corps cuve (72) fixé aux profilés métalliques (66).

13. Scooter selon la revendication 12, **caractérisé par le fait que** les profilés métalliques (66) sont des profilés tubulaires rectangulaires ou tabulaires semi-circulaires plats en acier ou en métal léger.
